# EUROPÄISCHE PATENTANMELDUNG

(11) **EP 2 570 563 A1**
(43) Veröffentlichungstag der Anmeldung: **20.03.2013**
(21) Anmeldenummer: 12184381.7
(22) Anmeldetag: 14.09.2012
(51) Int. Cl.: E04D 13/03, A01K 1/00, B32B 17/04

(54) **Lichtfirst, Materialkombination sowie Verfahren zur Eindeckung eines Lichtfirsts**

(30) Priorität: 15.09.2011 DE 102011053626
(71) Anmelder: Huesker Synthetic GmbH, 48712 Gescher (DE)
(72) Erfinder: Noordman, Marco, 7731 MX Ommen (NL); Lindeboom, Erik, 8043 LC Zwolle (NL); Heitmüller, Hubertus, 31592 Stolzenau (DE); Eßling, Jörg, 48712 Gescher (DE)
(74) Vertreter: Buchenau, Thomas

(57) **Zusammenfassung**

Die Erfindung betrifft einen Lichtfirst, eine insbesondere für Lichtfirste geeignete Materialkombination sowie ein Verfahren zur Eindeckung eines Lichtfirsts. Der Erfindung liegt die Aufgabe zugrunde, einen Lichtfirst sowie eine Materialkombination und ein Verfahren zur Eindeckung eines Lichtfirsts zur Verfügung zu stellen, die auf kostengünstige Art und Weise größere Breiten als bekannte Lichtfirste ermöglichen. Ein erfindungsgemäßer Lichtfirst umfasst eine Konstruktion (118) zur Anordnung eines einen Teilbereich eines Daches (102) überragenden, mindestens teilweise lichtdurchlässigen Deckelements (120), wobei das Deckelement (120) mindestens eine flexible Folie (142) sowie mindestens eine über, unter und/oder innerhalb der Folie (124) angeordnete gitterartige Struktur (134) umfasst.

## Beschreibung

Die Erfindung betrifft einen Lichtfirst, eine insbesondere für Lichtfirste geeignete Materialkombination sowie ein Verfahren zur Eindeckung eines Lichtfirsts. Als Lichtfirst im Sinne der Erfindung werden im Bereich einer oberen Kante eines Dachs angeordnete lichtdurchlässige Elemente bezeichnet, wie sie häufig bei Viehställen in der Landwirtschaft oder bei industriellen Hallen eingesetzt werden.

Aus DE 32 43 525 A1 ist ein System zur Befestigung dünnwandiger flexibler Häute an einer statisch tragenden Unterkonstruktion bekannt, das bei Zelten, Gewächshäusern, Lagerräumen, Behelfsarbeitsräumen und sonstigen Bauten verwendet wird. Als Häute werden insbesondere sogenannte Gitterfolien eingesetzt.

Aus DE 60 2004 006 360 T2 ist eine Wetterschutzmembran mit einer Kederstreifenverstärkung sowie ein Verfahren zu deren Herstellung bekannt.

Aus DE 92 02 831 U1 und aus DE 92 02 234 sind Folienstall-Systeme für Schafe bekannt, die im Wesentlichen aus einem Gestell und über das Gestell gespannten Folien bestehen.

Aus DE 78 37 156 U1 ist eine Befestigungsvorrichtung für eine Lichtkuppel bekannt, bei der als Deckelement eine flexible Folie zum Einsatz kommt.

Aus DE 203 06 175 U1 ist ein Lichtfirst mit verschiebbaren Stegglasplatten bekannt.

Aus DE 295 15 318 U1 ist ein Bauelementesatz für einen Lichtfirst bekannt, bei dem die Dachhaut aus sogenannten Lichtplatten, insbesondere aus gerecktem PVC besteht.

Bei bekannten Lichtfirst-Konstruktionen ist die Breite der Lichtfirste häufig auf ca. 3 Meter begrenzt. Dies geschieht entweder, weil die für einen breiteren Lichtfirst erforderliche Unterkonstruktion mit hohen Kosten verbunden wäre und/oder weil die direkte Sonneneinstrahlung durch einen breiteren Lichtfirst die Luft in dem Gebäude unterhalb des Lichtfirsts zu stark erwärmen würde. Eine auf 3 Meter oder weniger begrenzte Breite der bekannten Lichtfirste hat den Nachteil, dass sich im Stall, insbesondere bei tief stehender Sonne, eine ungleichmäßige Lichtverteilung ergibt.

Der Erfindung liegt die Aufgabe zugrunde, einen Lichtfirst sowie eine Materialkombination für einen Lichtfirst und ein Verfahren zur Eindeckung eines Lichtfirsts zur Verfügung zu stellen, die sich kostengünstig realisieren lassen und bei Vermeidung der vorstehend genannten Nachteile größere Breiten ermöglichen.

Die Lösung der Aufgabe erfolgt erfindungsgemäß mit den Merkmalen der Ansprüche 1, 5 bzw. 8. Vorteilhafte Weiterbildungen der Erfindung sind in den Unteransprüchen beschrieben.

Ein erfindungsgemäßer Lichtfirst umfasst eine Konstruktion zur Anordnung eines einen Teilbereich eines Daches überragenden, mindestens teilweise lichtdurchlässigen Deckelements, wobei das Deckelement mindestens eine flexible Folie sowie mindestens eine oberhalb der Folie angeordnete gitterartige Struktur umfasst. Bei der Folie handelt es sich um eine Gewebeplane. Durch Verwendung einer Folie, welche im Vergleich zu bekannten plattenartigen Elementen aus Glas oder Kunststoff ein nur geringes Gewicht aufweist, kann auf einfache und kostengünstige Art und Weise ein Lichtfirst mit einer großen Breite erstellt werden. Unter einer gitterartigen Struktur werden dreidimensionale Strukturen mit einer Vielzahl von Öffnungen verstanden. Dies können aus einem Monofil hergestellte Gewebe oder Gewirke sein. Die zusätzliche Verwendung einer gitterartigen Struktur oberhalb der Folie hat den Vorteil, dass der Lichteinfall durch das Deckelement so auf einfache und kostengünstige Art und Weise begrenzt werden kann. Aufgrund der dreidimensionalen Ausdehnung und der Oberfläche einer gitterartigen Struktur wird das einfallende Sonnenlicht zusätzlich gestreut, was in dem unterhalb des Lichtfirsts befindlichen Gebäude zu einer gleichmäßigen Lichtverteilung beiträgt. Mit einem erfindungsgemäßen Lichtfirst können auf einfache und kostengünstige Art und Weise Breiten von mehr als 3 Metern realisiert werden. Bevorzugte Breiten eines erfindungsgemäßen Lichtfirsts liegen bei ca. 3,5 bis 10 Metern, besonders bevorzugte Breiten bei 4 bis 8 Metern.

Um die von der Konstruktion auf das Deckelement wirkenden Kräfte möglichst gleichmäßig zu verteilen und Spannungsspitzen zu vermeiden, empfiehlt es sich, für die Konstruktion Tragprofile zu verwenden, die sich über die gesamte Breite des Lichtfirsts erstrecken und im Kontaktbereich zu dem Deckelement einen runden Querschnitt aufweisen.

In einer praktischen Ausführungsform ist das Deckelement oberhalb der Konstruktion angeordnet, und die Folie liegt auf der Konstruktion auf. Dabei bieten sich insbesondere die folgenden beiden Varianten an.

Gemäß einer ersten Variante liegt die gitterartige Struktur frei auf der Folie auf und kann sich relativ zu der Folie bewegen. Dies hat den Vorteil, dass durch äußere Einflüsse, wie zum Beispiel Wind oder Regen, hervorgerufene Relativbewegungen zwischen der gitterartigen Struktur und der Folie eine Selbstreinigung der Folie bewirken. Ein weiterer Vorteil der ersten Variante besteht darin, dass die Folie und die gitterartige Struktur bei der Errichtung des Lichtfirsts unabhängig voneinander (z.B. in Form von Materialrollen) auf das Dach transportiert werden können. So kann entweder das Gewicht beim Transport der Baumaterialien auf das Dach in zwei Teile aufgeteilt werden. Oder es können eine Folie und eine gitterartige Struktur mit relativ großer Materialstärke verwendet werden, welche in bereits miteinander verbundener Form aufgrund des Eigengewichts nur schwer verarbeitbar wären.

Gemäß einer zweiten Variante ist die gitterartige Struktur fest mit der Folie verbunden. Diese Variante hat den Vorteil, dass bei der Installation des Lichtfirstes nur eine Materialbahn transportiert und verarbeitet werden muss. Dadurch können die Installationszeit und somit auch die Lohnkosten für die Errichtung eines erfindungsgemäßen Lichtfirsts reduziert werden.

In einer weiteren praktischen Ausführungsform sind die gitterartige Struktur und/oder die Folie aus einem thermoplastischen Werkstoff oder aus Polyester hergestellt. Als thermoplastischer Werkstoff besonders geeignet sind hierbei Polyethylen (PE) und Polyvinylchlorid (PVC).

Die Verwendung eines aus einem Monofil hergestellten Gewebe oder Gewirke als gitterartige Struktur hat den Vorteil, dass mechanische Einwirkungen die Oberfläche des Gewebes oder Gewirkes nicht derart verändern. Somit ist sichergestellt, dass das Gewebe oder Gewirke die Folie nicht beschädigt.

Als Folie besonders bevorzugt sind Gewebeplanen aus sogenanntem PE-Bändchengewebe, da diese im Vergleich zu Standardfolien mit homogener Struktur eine höhere Reißfestigkeit aufweisen und stabiler sind.

Die Erfindung betrifft auch eine Materialkombination, insbesondere zur Verwendung als Dachhaut für Lichtfirste. Eine erfindungsgemäße Materialkombination umfasst eine lichtdurchlässige, flexible Folie, insbesondere eine Gewebeplane aus PE-Bändchengewebe, und eine gitterartige Struktur, wobei die Folie und die gitterartige Struktur miteinander zu einer einstückigen Materialbahn verbunden sind. Dabei wird als Folie eine Gewebeplane verwendet und als gitterartige Struktur ein aus einem Monofil hergestelltes Gewebe oder Gewirke. Unter einer einstücken Materialbahn werden sowohl Materialbahnen verstanden, bei denen die Folie und die gitterartige Struktur vollflächig miteinander verbunden sind als auch solche, bei denen die Folie und die gitterartige Struktur nur teilweise miteinander verbunden sind. Eine Verbindung kann beispielsweise nur in parallel zueinander verlaufenden streifenartigen Bereichen, nur an einzelnen Punkten oder in sonstiger geometrischer Anordnung erfolgen. Auf die damit verbundenen Vorteile, die vorstehend bereits im Zusammenhang mit der "zweiten Variante" beschrieben wurden, wird hiermit verwiesen.

Die Verbindung der Folie(n) und der gitterartigen Struktur(en) einer erfindungsgemäßen Materialkombination kann beispielsweise dadurch erfolgen, dass als Folie ein thermoplastischer Werkstoff gewählt wird und die gitterartige Struktur innerhalb der Folie angeordnet ist. Dazu kann eine gitterartige Struktur in einer Kunststoffspritzgussform in einer gewünschten Position angeordnet und dann umspritzt oder in eine durch Erhitzung aufgeweichte oder in einem schmelzflüssigen Zustand vorliegende Folie eingebracht werden.

In einer anderen praktischen Ausführungsform bestehen die gitterartige Struktur und die flexible Folie aus Polyethylen und werden durch Anordnung einer haftvermittelnden Polyethylenbeschichtung zwischen der Folie und der gitterartigen Struktur miteinander verbunden. Bei dieser Ausführungsform wird die Dicke der Polyethylenbeschichtung vorzugsweise so gewählt, dass die gitterartige Struktur aus der Polyethylenbeschichtung herausragt. Dies hat den Vorteil, dass die gitterartige Struktur die etwas tiefer liegende Folie vor mechanischer Beschädigung schützt.

Die Erfindung betrifft auch ein Verfahren zur Eindeckung eines Lichtfirsts, bei welchem folgende Verfahrensschritte durchgeführt werden:
a) Errichtung einer Konstruktion zur Anordnung eines einen Teilbereich eines Daches überragenden, mindestens teilweise lichtdurchlässigen Deckelements, insbesondere einer sich über die gesamte Breite des Lichtfirsts erstreckende Konstruktion mit Tragprofilen, die im Kontaktbereich mit dem Deckelement einen runden Querschnitt aufweisen,
b) Aufbringen eines Deckelements umfassend mindestens eine Folie und mindestens eine gitterartiges Struktur auf die Konstruktion, wobei die Folie eine Gewebeplane ist und die gitterartige Struktur ein aus einem Monofil hergestelltes Gewebe oder Gewirke,
c) Spannen der mindestens einen Folie in Querrichtung des Lichtfirstes und optionales Spannen der mindestens einer gitterartigen Struktur in Querrichtung des Lichtfirstes.

Mit dem erfindungsgemäßen Verfahren können auf einfache und kostengünstige Art und Weise Lichtfirste erstellt werden, die in ihrer Breite sehr variabel sind, da die Eindeckung selbst ein nur geringes Gewicht aufweist. Trotz des geringen Eigengewichts der Eindeckung ist diese dazu in der Lage, ausreichende Kräfte und Lasten aufzunehmen (z.B. Schneelasten). Durch Wahl einer geeigneten gitterartigen Struktur kann der Lichteinfall und die damit verbundene Aufheizung des unter dem Lichtfirst angeordneten Gebäudes gesteuert werden. Ferner kann die gitterartige Struktur die Robustheit des Deckelements erhöhen. Auf die weiteren Vorteile, welche vorstehend im Zusammenhang mit dem erfindungsgemäßen Lichtfirst und der erfindungsgemäßen Materialkombination beschrieben sind, wird hiermit verwiesen.

In einer praktischen Ausführungsform des erfindungsgemäßen Verfahrens wird zum Spannen der Folie entweder eine Kederverbindung zwischen der Folie und/oder der gitterartigen Struktur sowie einer Kederschiene hergestellt, welche Teil der Konstruktion ist. Oder die Folie und/oder die gitterartige Struktur werden gestreckt und anschließend an der Konstruktion fixiert, die Spannung aufrecht zu erhalten. Dies kann beispielsweise dadurch erfolgen, dass die Folie und/oder die gitterartige Struktur mit geeigneten Klemmelementen an der Konstruktion festgelegt werden..

Wenn das Deckelement mittels Kederverbindung mit der Konstruktion verbunden werden soll, ist es vorteilhaft, das Deckelement an mindestens zwei seitlichen Kannten, die in eine Kederschiene eingesetzt werden sollen, mit einer Keder zu verbinden. Eine derartige Verbindung kann einfach und kostengünstig beispielsweise durch Nähte hergestellt werden.

Weitere praktische Ausführungsformen und Vorteile der Erfindung sind nachfolgend im Zusammenhang mit den Zeichnungen beschrieben. Es zeigen:
- Figur 1: einen erfindungsgemäßen Lichtfirst in einer Seitenansicht,
- Figur 2: eine erste Ausführungsform einer erfindungsgemäßen Materialkombination in einer Schnittdarstellung,
- Figur 3: eine zweite Ausführungsform einer erfindungsgemäßen Materialkombination in einer Schnittdarstellung,
- Figur 4: eine dritte Ausführungsform einer erfindungsgemäßen Materialkombination in einer Schnittdarstellung,
- Figur 5: einen Ausschnitt einer erfindungsgemäßen Materialkombination mit einer Keder zum Einführen in eine Kederschiene.

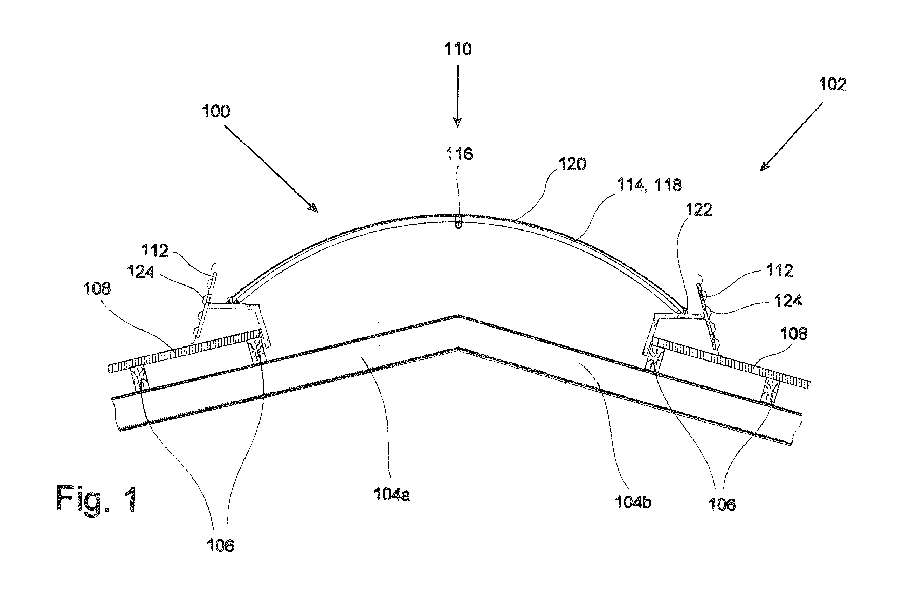

Figur 1 zeigt einen erfindungsgemäßen Lichtfirst 100, der den höchsten Punkt eines Dachs 102 eines Viehstalls bildet.

Elementare Tragelemente des Dachs 102 sind die Sparren 104, welche in der gezeigten Ausführungsform aus Doppel-T-Trägern bestehen. Oberhalb der quer zum Dach 102 verlaufenden Sparren 104 sind sich in Längsrichtung des Dachs 102 erstreckende Pfetten 106 angeordnet.

Auf den Pfetten 106 ist eine aus flächigen Elementen bestehende Dacheindeckung 108 montiert. Mit der Dacheindeckung 108 und den von der Dachmitte 110 nächst gelegenen Pfetten 106 sind die Firstkonsolen 112 verbunden.

Die Firstkonsolen 112 dienen der Befestigung von in Querrichtung verlaufenden bogenförmigen Tragprofilen 114. Die bogenförmigen Tragprofile 114 wiederum sind mit einem im Bereich der Dachmitte 110 verlaufenden Stabilisierungsrohr 116 verbunden. Das Stabilisierungsrohr 116 verhindert, dass die parallel zueinander angeordneten Tragprofile 114 sich in Längsrichtung des Dachs 102 relativ zueinander bewegen.

Die quer verlaufenden Tragprofile 114 und das Stabilisierungsrohr 116 bilden eine Konstruktion 118 zur Anordnung eines Deckelements 120 eines erfindungsgemäßen Lichtfirsts. Das in Figur 1 gezeigte Deckelement 120 ist im Bereich der Firstkonsolen 112 in Befestigungselementen 122 eingespannt und wird so in Querrichtung des Dachs 102 unter Spannung gehalten.

Wie in Figur 1 zu erkennen ist, sind an den Firstkonsolen 112 auch Windabweiser 124 angeordnet, die dazu dienen, Wind nach oben abzuleiten, um über dem Lichtfirst 100 einen Unterdruck zu erzeugen und somit Luft aus dem unterhalb des Lichtfirsts 100 befindlichen Gebäude zu befördern. Durch diesen Effekts kann ferner vermieden werden, dass Niederschlag durch im Bereich des Lichtfirsts vorhandene Öffnungen (in Figur 1 nicht gezeigt) gelangt.

Zur Klarstellung wird noch einmal explizit darauf hingewiesen, dass es sich bei den bogenförmigen Firstkonsolen 112 und den Tragprofilen 114 um in Längsrichtung des Lichtfirsts wiederkehrende Elemente handelt. Diese sind vorzugsweise in gleichmäßigen Abständen zueinander angeordnet. Das Stabilisierungsrohr 116, die Befestigungselemente 122, die Windabweiser 124 und die Deckelemente 120 hingegen sind Elemente, die sich über die gesamte Länge des Lichtfirsts 100 erstrecken.

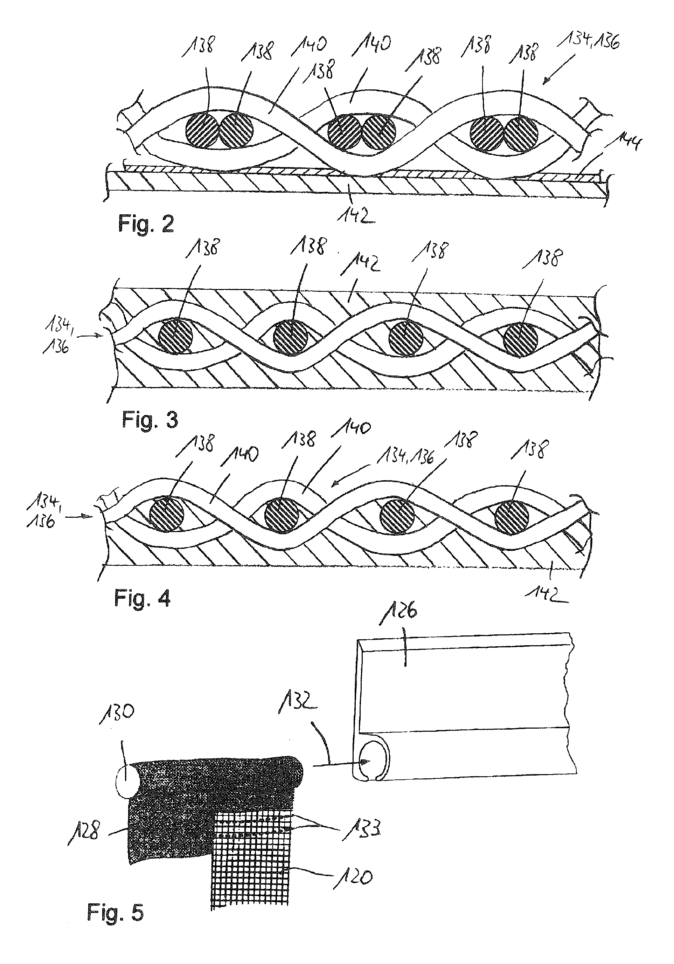

Bei den in Figur 1 nur schematisch dargestellten Befestigungselementen 120 kann es sich beispielsweise um eine Kederschiene 126 handeln, wie diese in Figur 4 dargestellt ist. In diesem Fall kann das Deckelement 120 (in Figur 4 nur schematisch dargestellt), wenn es fest mit der Kederfahne 128 verbunden ist, auf einfache Art und Weise mit den Firstkonsolen 112 verbunden werden. Dazu muss lediglich die fest mit der Kederfahne 128 verbundene Keder 130 in die in der Kederschiene 126 vorgesehene Öffnung 132 eingeschoben werden. In dem in Figur 4 gezeigten Ausführungsbeispiel ist die Kederfahne 128 mit einer durch gestrichelte Linien angedeutete Doppelnaht 133 mit dem Deckelement 120 vernäht. Die Kederfahne 128 kann jedoch ebenfalls mit dem Deckelement 120 verschweißt oder auf eine andere geeignete Art und Weise verbunden werden. Die Kederschiene 126 selbst kann einstückig in der Konstruktion 118 ausgebildet sein oder durch Schweißen, Nieten, Kleben, Schrauben oder auf andere geeignete Art und Weise fest mit der Konstruktion 118 verbunden sein.

Die Figuren 2, 3 und 4 zeigen drei bevorzugte Ausführungsformen erfindungsgemäßer Materialkombinationen in Schnittdarstellungen. Obwohl bei allen gezeigten Ausführungsbeispielen als gitterartige Struktur 134 Gewebe 136 gezeigt sind, wird hiermit noch einmal klargestellt, dass anstelle von Geweben 136 auch Gewirke oder sonstige gitterartige Strukturen, bevorzugt biegeelastische und besonders bevorzugt derartige Strukturen, deren Flexibilität ausreichend ist, um die Strukturen zu einer Materialbahn aufrollen und so gut transportieren zu können.

Alle Gewebe 136 weisen Kettfäden 138 und Schussfäden 140 auf, wobei bei der in Figur 2 gezeigten Ausführungsform jeweils zwei parallel zueinander verlaufende Kettfäden 138 eine Kettfadengruppe bilden, während bei den in den Figuren 3 und 4 gezeigten Ausführungsformen einzelne Kettfäden 138 über die Schussfäden 140 miteinander verbunden sind.

Bei allen Ausführungsformen ist das Gewebe 136 fest mit einer lichtdurchlässigen, flexiblen Folie 142 verbunden.

Bei der in Figur 2 gezeigten ersten Ausführungsform wurde die Verbindung durch eine haftvermittelnde Schicht 144 hergestellt. Wenn das Gewebe 136 aus einem Polyethylen besteht und die Folie 142 ebenfalls aus einen Polyethylen besteht, sollte als haftvermittelnde Schicht vorzugsweise ebenfalls ein Polyethylen verwendet werden.

Werden als Materialien für Gewebe 136 und Folie 142 andere Materialien verwendet, kann als haftvermittelnde Schicht 142 auch ein Klebstoff oder ein alternativer Haftvermittler verwendet werden.

Bei der in Figur 2 gezeigten Ausführungsform ist das Gewebe 136 oberhalb der Folie 140 angeordnet, so dass das Gewebe die Folie 142 vor äußeren, insbesondere mechanische Einwirkungen (z.B. herabfallende Äste, Vögel, die in die Folie picken etc.) schützt. Dies gilt umso mehr, je kleiner der Abstand zwischen Kettfäden 138 und Schussfäden 140 gewählt ist und je größer der Abstand der Oberseite des Gewebes von der Oberseite der Folie ist.

Als Gewebe 136 wird bei der in Figur 2 gezeigten Ausführungsform vorzugsweise ein PEHD-Monofilgewebe mit einer Flächenmasse von 150 g/m² bis 300 g/m² und/oder einer Höchstzugkraft von Kette und Schuss von mindestens 30 kN/m, besonders bevorzugt mindestens 35 kN/m, verwendet.

Bei der in Figur 3 gezeigten Ausführungsform ist das Gewebe 136 vollständig innerhalb der Folie 142 angeordnet. Dadurch ergibt sich eine glatte Oberfläche auf der Oberseite, die Regenwasser mit sehr geringen Widerstand ablaufen lässt und die sich leicht reinigen lässt. Eine Beschädigung der Oberfläche würde sich zunächst auf den Bereich der Folie 142 oberhalb des Gewebes 140 auswirken. Funktionale Einschränkungen und insbesondere Undichtigkeiten entstehen bei dieser Ausführungsform allerdings ebenfalls auch erst, wenn das robuste Gewebe 136 und der unterhalb des Gewebes 140 befindliche Teil der Folie 142 zerstört wird.

Die in Figur 3 gezeigte Ausführungsform lässt sich einfach und kostengünstig herstellen, wenn ein Gewebe 136 aus einem Polyester und/oder PVC und eine Folie 142 aus Polyvinylchlorid (PVC) verwendet werden. In diesem Fall kann das Gewebe 136 in die Folie eingegossen werden. Das Gewebe 136 ist in diesem Fall vorzugsweise ein PES-Multifilgewebe, wobei die Flächenmasse von Gewebe und Folie zusammen 650 g/m² beträgt und/oder die Höchstzugkraft von Kette und Schuss des Gewebes mindestens 1000 N/5 cm und vorzugsweise mindestens 1500 N/5 cm beträgt.

Eine funktional ähnliche wie die in Figur 3 gezeigte Ausführungsform einer erfindungsgemäßen Materialkombination (nicht dargestellt) kann auch dadurch hergestellt werden, dass zwei lichtdurchlässige Folien miteinander verbunden werden und vor der Verbindung der beiden Folien zwischen diese Folien eine gitterartige Struktur eingelegt wird.

Bei der in Figur 4 gezeigten Ausführungsform wurde das Gewebe 136 ohne zusätzliche haftvermittelnde Schicht mit der Folie 142 verbunden. Dies kann beispielsweise dadurch erfolgen, dass die Folie 142 aus einem thermoplastischen Werkstoff hergestellt wird, der zumindest auf der Oberfläche so stark erwärmt wird, dass er erweicht und das Gewebe 136 anschließend mit der Folie 142 verpresst wird. Der Druck zum Verpressen wurde bei der in Figur 4 gezeigten Ausführungsform so gewählt, dass das Gewebe 136 zumindest teilweise aus der Folie 142 herausragt und somit zumindest in diesen Bereichen einen besseren Schutz als die Folie 142 bietet.

In den Figuren 2 bis 4 sind Gewebe mit Rundfäden gezeigt. Statt Rundfäden können auch Flachfäden verwendet werden, beispielsweise, wenn ein Gewebe vollständig innerhalb einer relativ dünnen Folie angeordnet sein soll.

Für alle beschriebenen Ausführungsformen gilt Folgendes:

Vorzugsweise sind der Abstand der Kettfäden zueinander und der Schussfäden zueinander etwa gleich groß, so dass das Gewebe 136 ungefähr quadratische Maschen aufweist. Bevorzugt werden Gewebe mit einer Maschenweite von weniger als 5 mm, besonders bevorzugt weniger als 2 mm gewählt.

Um das Gewicht einer erfindungsgemäßen Materialkombination gering zu halten und dennoch einen guten Schutz vor mechanischen Einwirkungen zu erzielen, werden für die Herstellung der Gewebe und/oder Gewirke Garnstärken von weniger als 2 mm eingesetzt. Bevorzugt werden Garnstärken von weniger als 1 mm und besonders bevorzugt von weniger als 0,5 mm eingesetzt.

Das Flächengewicht einer gitterartigen Struktur, insbesondere eines Gewebes oder Gewirkes, beträgt vorzugsweise weniger als 1000 g/m², weiter vorzugsweise weniger als 700 g/m².

Das Flächengewicht der Folie einer erfindungsgemäßen Materialkombination und eines erfindungsgemäßen Lichtfirsts beträgt vorzugsweise weniger als 500 g/m².

### Bezugszeichenliste

- 100: Lichtfirst
- 102: Dach
- 104: Sparren
- 106: Pfetten
- 108: Dacheindeckung
- 110: Dachmitte
- 112: Firstkonsolen
- 114: Tragprofile
- 116: Stabilisierungsrohr
- 118: Konstruktion
- 120: Deckelement
- 122: Befestigungselemente
- 124: Windabweiser
- 126: Kederschiene
- 128: Kederfahne
- 130: Keder
- 132: Öffnung
- 133: Doppelnaht
- 134: gitterartige Struktur
- 136: Gewebe
- 138: Kettfäden
- 140: Schussfäden
- 142: Folie
- 144: haftvermitteinde Schicht

## Patentansprüche

1. Lichtfirst umfassend eine Konstruktion (118) zur Anordnung eines einen Teilbereich eines Daches (102) überragenden, mindestens teilweise lichtdurchlässigen Deckelements (120), wobei das Deckelement (120) mindestens eine flexible Folie (142) sowie mindestens eine gitterartige Struktur (134) umfasst,
**dadurch gekennzeichnet,**
**dass** die flexible Folie (142) eine Gewebeplane ist, die gitterartige Struktur (134) ein aus einem Monofil hergestelltes Gewebe oder Gewirke ist und die gitterartige Struktur (134) oberhalb der flexiblen Folie (142) angeordnet ist.

2. Lichtfirst nach Anspruch 1, **dadurch gekennzeichnet, dass** die Konstruktion (118) Tragprofile (114) umfasst, die sich über die gesamte Breite des Lichtfirsts erstrecken und im Kontaktbereich zu dem Deckelement (120) einen runden Querschnitt aufweisen.

3. Lichtfirst nach einem oder mehreren der vorstehenden Ansprüche, **dadurch gekennzeichnet, dass** das Deckelement (120) oberhalb der Konstruktion (118) angeordnet ist und die Folie (142) unmittelbar auf der Konstruktion (118) aufliegt.

4. Lichtfirst nach einem oder mehreren der vorstehenden Ansprüche, **dadurch gekennzeichnet, dass** die gitterartige Struktur (134) und/oder die Folie (142) aus einem thermoplastischen Werkstoff, insbesondere aus Polyethylen (PE) und/oder Polyvinylchlorid (PVC), oder aus Polyester hergestellt sind.

5. Materialkombination, insbesondere für die Verwendung als Dachhaut bei Lichtfirsten, umfassend mindestens eine lichtdurchlässige, flexible Folie (142) und mindestens eine gitterartige Struktur (134), **dadurch gekennzeichnet, dass** die Folie (142) eine Gewebeplane ist und die gitterartige Struktur (134) ein aus einem Monofil hergestelltes Gewebe oder Gewirke ist, wobei die Folie (142) und die gitterartige Struktur (134) miteinander verbunden sind und eine einstückige Materialbahn bilden.

6. Materialkombination nach Anspruch 5, **dadurch gekennzeichnet, dass** die Folie (142) aus einem thermoplastischen Werkstoff besteht und die gitterartige Struktur (134) innerhalb der Folie (142) angeordnet ist.

7. Materialkombination nach Anspruch 5, **dadurch gekennzeichnet, dass** sowohl die Folie (142) als auch die gitterartige Struktur (134) aus Polyethylen (PE) bestehen und die gitterartige Struktur (134) mittels einer zwischen der Folie (142) und der gitterartigen Struktur (134) angeordneten Polyethylenbeschichtung miteinander verbunden sind, insbesondere derart, dass die gitterartige Struktur (134) aus der Polyethylenbeschichtung herausragt.

8. Verfahren zur Eindeckung eines Lichtfirsts, **gekennzeichnet durch** folgende Verfahrensschritte:
a. Errichtung einer Konstruktion zur Anordnung eines einen Teilbereich eines Daches (102) überragenden, mindestens teilweise lichtdurchlässigen Deckelements (120), vorzugsweise einer sich über die gesamte Breite des Lichtfirsts erstreckende Konstruktion (118) mit Tragprofilen, die im Kontaktbereich zu dem Deckelement (120) einen runden Querschnitt aufweisen,
b. Aufbringen einer flexiblen Folie (142) als Deckelement (120) und einer gitterartigen Struktur (134) auf die Konstruktion (118), wobei die Folie (142) eine Gewebeplane ist und die gitterartige Struktur (134) ein aus einem Monofil hergestelltes Gewebe oder Gewirke,
c. Spannen der Folie (142) und optionales Spannen der gitterartigen Struktur (134) in Querrichtung des Lichtfirstes.

9. Verfahren nach dem vorstehenden Anspruch, **dadurch gekennzeichnet, dass** das Spannen der Folie (142) durch mindestens einen der nachfolgenden Schritte erfolgt:
a. Herstellen einer Kederverbindung zwischen der Folie (142) und/oder der gitterartigen Struktur (134) und einer Kederschiene der Konstruktion (118),
b. Spannen und Verklemmen der Folie (142) und/oder der gitterartigen Struktur (134) mit der Konstruktion (118) durch Verwendung von Klemmelementen.
